# EUROPEAN PATENT APPLICATION

(11) **EP 0 878 936 A2**
(43) Date of publication of application: **18.11.1998**
(21) Application number: 98108352.0
(22) Date of filing: 07.05.1998
(51) Int. Cl.: H04L 12/28

(54) **Communication system and circuit controller**

(30) Priority: 12.05.1997 JP 137906/97
(71) Applicant: VICTOR COMPANY OF JAPAN, LIMITED, Yokohama-shi, Kanagawa 221-0022 (JP)
(72) Inventor: Toguchi, Satoru, Izumi-ku, Yokohama (JP); Onodera, Katsuya, Sagamithara-shi, Kanagawa-ken (JP); Hirasawa, Masahiro, Yamato-shi, Kanagawa-ken (JP); Azami, Takeyoshi, Nishi-ku, Yokohama (JP); Tazawa, Katsuyuki, Oota-ku, Tokyo (JP)
(74) Representative: Pellmann, Hans-Bernd, Dipl.-Ing.

(57) **Abstract**

A communication system includes a wire network, a first terminal device, and a second terminal device. A first master device connected to the wire network transmits and receives data to and from the first terminal device by wireless at a first data rate. For example, light is used by the wireless data transmission between the first master device and the first terminal device. A second master device connected to the wire network transmits and receives data to and from the second terminal device by wireless at a second data rate lower than the first data rate. For example, radio is used by the wireless data transmission between the second master device and the second terminal device. A server connected to the wire network manages addresses of the first and second master devices.

## Description

### BACKGROUND OF THE INVENTION

### Field of the Invention

This invention generally relates to a communication system. This invention particularly relates to a communication system for providing voice and data communication services through a local area network (LAN). Also, this invention generally relates to a circuit controller.

### Description of the Related Art

In a wired LAN (local area network), terminal devices are connected to each other via wires. The terminal devices can communicate with each other via the wires.

It is known to combine a wired LAN and a wireless communication network. For example, a wired LAN is additionally provided with an access point device (a gateway device) which can execute both wired communication and wireless communication. The access point device is connected via wires to normal terminal devices in the wired LAN. The access point device can communicate with the normal terminal devices in the wired LAN via the wires. Also, the access point device can execute wireless communication with terminal devices in a wireless communication network. In this case, the wired LAN and the wireless communication network are connected via the access point device (the gateway device). In addition, the access point device is a member of the wired LAN as well as a member of the wireless communication network.

According to an example of the wireless communication network, the access point device (the gateway device) and the terminal devices can communicate with each other by using optical signals such as infrared-light signals.

Generally, to implement reliable transmission of infrared-light signals between two communication devices, it is necessary to radiate the infrared-light signals with high directivities. Accordingly, communication devices using infrared-light signals tend to be unsuited for portable and mobile uses.

### SUMMARY OF THE INVENTION

It is a first object of this invention to provide an improved communication system.

It is a second object of this invention to provide an improved circuit controller.

A first aspect of this invention provides a communication system comprising a wire network; a first terminal device; a first master device connected to the wire network, and transmitting and receiving data to and from the first terminal device by wireless at a first data rate; a second terminal device; a second master device connected to the wire network, and transmitting and receiving data broadly to and from the second terminal device by wireless at a second data rate lower than the first data rate; and a server connected to the wire network for managing addresses of the first and second master devices.

A second aspect of this invention provides a communication system comprising a wire network; a first terminal device; a master device connected to the wire network, and transmitting and receiving data to and from the first terminal device by tight; a second terminal device; a base device connected to the wire network, and transmitting and receiving data to and from the second terminal device by radio; and a server connected to the wire network for managing an address of the master device and an address of the base device.

A third aspect of this invention is based on the second aspect thereof, and provides a communication system wherein the server comprises means for enabling and controlling transmission of data between the master device and the base device via the wire network.

A fourth aspect of this invention is based on the second aspect thereof, and provides a communication system further comprising an interface connected between the wire network and a public telephone network, and a circuit controller connected to the wire network for enabling and controlling communication between the second terminal device and the public telephone network via the base device, the wire network, and the interface.

A fifth aspect of this invention provides a communication system comprising a private wire network; a slave communication device; a master communication device connected to the private wire network, and transmitting and receiving data to and from the slave communication device by light; a mobile radio communication device; and a base radio communication device connected to the private wire network, and transmitting and receiving data to and from the mobile radio communication device by radio.

A sixth aspect of this invention is based on the fifth aspect thereof, and provides a communication system further comprising a server connected to the private wire network for enabling and controlling transmission of data between the master communication device and the base radio communication device via the private wire network.

A seventh aspect of this invention is based on the fifth aspect thereof, and provides a communication system further comprising an interface connected between the private wire network and a public telephone network, and a circuit controller connected to the private wire network for enabling and controlling communication between the mobile radio communication device and the public telephone network via the base radio communication device, the private wire network, and the interface.

An eighth aspect of this invention provides a circuit controller comprising means for managing addresses of respective devices connected to a private wire network; and means for controlling communication between an interface connected to a public telephone network and a mobile radio station via a base radio station connected to the private wire network; wherein the interface and the base radio station are formed by the devices connected to the private wire network.

### BRIEF DESCRIPTION OF THE DRAWINGS

Fig. 1 is a diagram of a communication system according to an embodiment of this invention.

Fig. 2 is a diagram of a portion of the communication system in Fig. 1 which includes a function block diagram of a circuit controller in Fig. 1.

Fig. 3 is a diagram of a portion of the communication system in Fig. 1 which includes a block diagram of a base radio station in Fig. 1.

Fig. 4 is a block diagram of a master optical communication device in Fig. 1.

Fig. 5 is a block diagram of a slave optical communication device in Fig. 1.

### DESCRIPTION OF THE PREFERRED EMBODIMENT

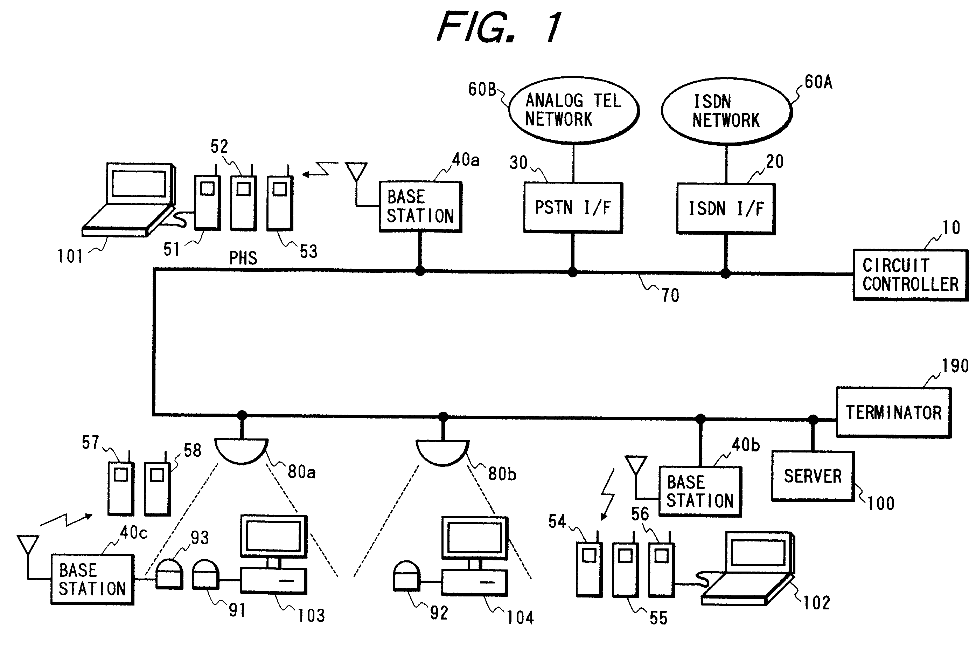

With reference to Fig. 1, a communication system includes a wire-based private network 70 of a known type such as the Ethernet type or the LAN (local area network) type. The communication system also includes a circuit controller 10, an ISDN (Integrated Services Digital Network) interface 20, a PSTN (private switched telephone network) interface 30, base radio stations or base radio devices 40a and 40b, master optical communication devices 80a and 80b, a server 100, and a terminator 190 which are connected to the private network 70.

Different addresses (different identification numbers) are previously assigned to the devices 10, 20, 30, 40a, 40b, 80a, 80b, and 100 respectively. The server 100 includes a computer programmed to control the private network 70 and also the devices 10, 20, 30, 40a, 40b, 80a, and 80b connected to the private network 70. The control of the private network 70 contains management of the addresses of the devices 10, 20, 30, 40a, 40b, 80a, and 80b.

The ISDN interface 20 is connected to a public ISDN network 60A for high-rate digital communications. The ISDN interface 20 serves to transfer voice data and communication data between the private network 70 and the public ISDN network 60A. The PSTN interface 30 is connected to an analog public telephone network 60B. The PSTN interface 30 serves to transfer voice information (voice data) between the private network 70 and the analog public telephone network 60B.

The base radio station 40a can communicate with mobile radio terminal devices (mobile radio stations) 51, 52, and 53 by radio which are located in the service area thereof. The mobile radio terminal device 51 is connected to a personal computer 101. The base radio station 40b can communicate with mobile radio terminal devices (mobile radio stations) 54, 55, and 56 by radio which are located in the service area thereof. The mobile radio terminal device 56 is connected to a personal computer 102. Also, a base radio station 40c can communicate with mobile radio terminal devices (mobile radio stations) 57 and 58 by radio which are located in the service area thereof. Different identification numbers are previously assigned to the mobile radio terminal devices 51, 52, 53, 54, 55, 56, 57, and 58, respectively. The mobile radio terminal devices 51, 52, 53, 54, 55, 56, 57, and 58 use, for example, mobile PHS (Personal Handy-phone System) telephone sets, respectively.

The circuit controller 10 includes a computer which operates in accordance with a program stored therein. Specifically, the computer in the circuit controller 10 is programmed to manage unoccupied telephone lines, and to implement call-related control such as control of generating calls and control of accepting calls incoming.

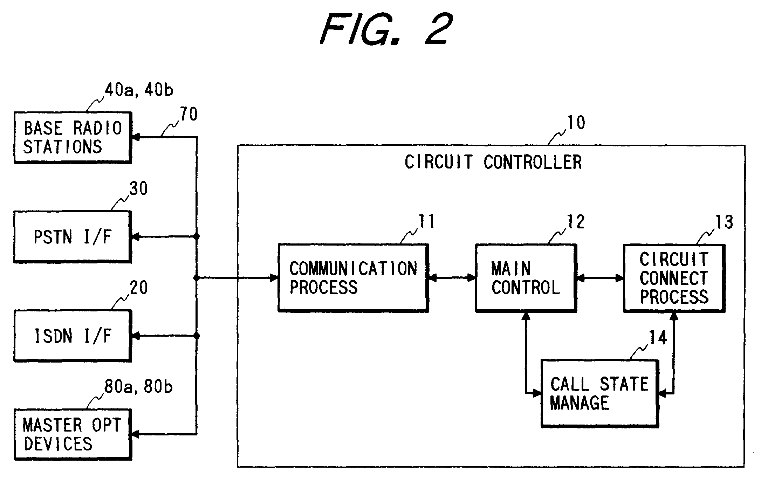

Fig. 2 is a function block diagram (an operation flow diagram) of the circuit controller 10. It should be noted that Fig. 2 does not directly show the hardware structure of the circuit controller 10.

With reference to Fig. 2, the circuit controller 10 has a communication-with-terminal processing section 11, a main controlling section 12, a circuit connection processing section 13, and a call state managing section 14. The communication-with-terminal processing section 11 transmits and receives signals to and from the ISDN interface 20, the PSTN interface 30, the base radio stations 40a and 40b, and the master optical communication devices 80a and 80b via the private network 70.

In the case where the mobile radio terminal device 51 is required to transmit a call to an external device connected to the analog public telephone network 60B, the circuit controller 10 operates as follows. In this case, the mobile radio terminal device 51 transmits a signal of a call starting request to the base station 40a by radio. The base radio station 40a generates a signal of a call setting request in response to the call starting request signal. The base radio station 40a transmits the call setting request signal to the circuit controller 10 via the private network 70. When the circuit controller 10 receives the call setting request signal, it implements a step of searching for an unoccupied PSTN line connected to the PSTN interface 30. In addition, the circuit controller 10 implements a step of controlling call-related signal transmission between the base radio station 40a and the PSTN interface 30.

Specifically, the communication-with-terminal processing section 11 in the circuit controller 10 receives the call setting request signal from the private network 70. The communication-with-terminal processing section 11 notifies the main controlling section 12 of the received call setting request signal. The call setting request signal contains information of the identification number of the source (the call generating source), that is, information of the identification number of the mobile radio terminal device 51. Also, the call setting request signal contains information of the telephone number of a destination to which the related call should be directed. The main controlling section 12 extracts the information of the source identification number and the information of the destination telephone number from the call setting request signal. The main controlling section 12 notifies the circuit connection processing section 13 of the source identification number and the destination telephone number. The circuit connection processing section 13 inquires of the call state managing section 14 whether an unoccupied PSTN line connected to the PSTN interface 30 is present or absent. The call state managing section 14 always monitors the call-related states of the devices 20, 30, 40a, 40b, 80a, and 80b to decide whether an unoccupied PSTN line connected to the PSTN interface 30 is present or absent, and whether an unoccupied ISDN line connected to the ISDN interface 20 is present or absent. In other words, the call state managing section 14 always decides whether or not the PSTN interface 30 is usable, and whether or not the ISDN interface 20 is usable. When an unoccupied PSTN line connected to the PSTN interface 30 is present, that is, when the PSTN interface 30 is usable, the call state managing section 14 returns a signal of the identification number (the address) of the PSTN interface 30 to the circuit connection processing section 13 as a response to the inquiry therefrom. The signal returned to the circuit connection processing section 13 indicates that the PSTN interface 30 is usable.

Subsequently, the circuit connection processing section 13 notifies the main controlling section 12 that the PSTN interface 30 is usable. When the main controlling section 12 is notified that the PSTN interface 30 is usable, the main controlling section 12 commands the communication-with-terminal processing section 11 to issue a signal of a call setting acceptance. In addition, the main controlling section 12 commands the communication-with-terminal processing section 11 to issue a signal of a call setting request. The communication-with-terminal processing section 11 transmits the call setting acceptance signal to the base radio station 40a. Also, the communication-with-terminal processing section 11 transmits the call setting request signal to the PSTN interface 30.

The call setting request signal transmitted to the PSTN interface 30 from the the communication-with-terminal processing section 11 in the circuit controller 10 contains the information of the destination telephone number. The PSTN interface 30 extracts the information of the destination telephone number from the call setting request signal. The PSTN interface 30 generates a dial pulse (including tone pulse) signal in response to the destination telephone number. The PSTN interface 30 outputs the dial pulse signal to the unoccupied PSTN line in the analog public telephone network 60B.

The base radio stations 40a and 40b are similar in structure to each other. Only the base radio station 40a will be explained in detail hereinafter.

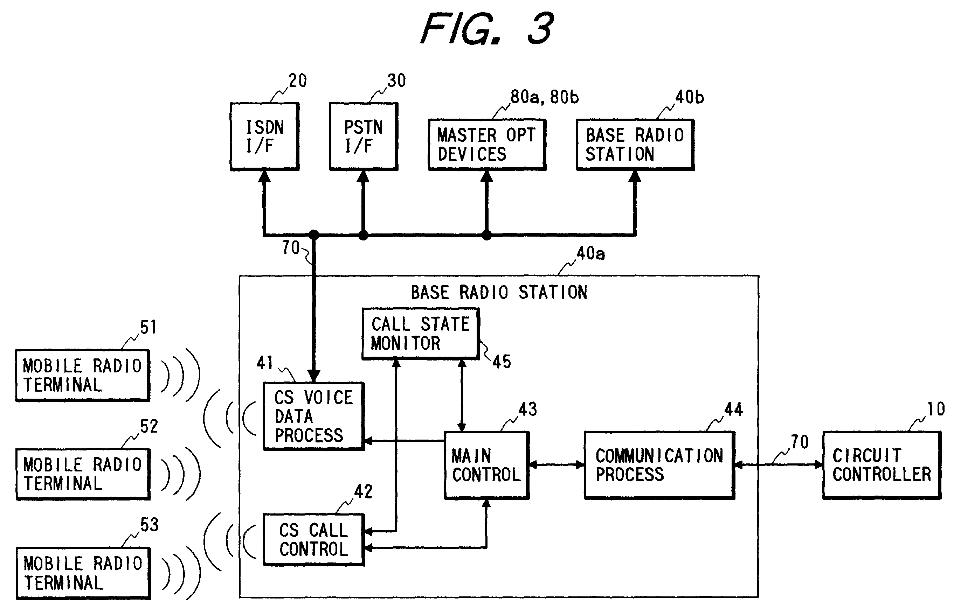

As shown in Fig. 3, the base radio station 40a includes a CS (cell station) voice data processing section 41, a CS call controlling section 42, a main controlling section 43, a communication processing section 44, and a call state monitoring section 45.

The CS voice data processing section 41 is connected via the private network 70 to the ISDN interface 20, the PSTN interface 30, the master optical communication devices 80a and 80b, and the base radio station 40b. The CS voice data processing section 41 is also connected to the main controlling section 43. The CS voice data processing section 41 can communicate with the mobile radio terminal devices 51, 52, and 53 by radio. The CS call controlling section 42 is connected to the main controlling section 43 and the call state monitoring section 45. The CS call controlling section 42 can communicate with the mobile radio terminal devices 51, 52, and 53 by radio. The CS voice data processing section 41 and the CS call controlling section 42 have a common RF (radio frequency) circuit and an antenna for radio communication with the mobile radio terminal devices 51, 52, and 53. The main controlling section 43 is connected to the communication processing section 44 and the call state monitoring section 45. The communication processing section 44 is connected to the circuit controller 10 via the private network 70.

The main controlling section 43 includes a computer which operates in accordance with a program stored therein. The computer in the main controlling section 43 is programmed to implement processes which will be indicated later.

In the case where the mobile radio terminal device 51 is required to transmit a call to an external device connected to the analog public telephone network 60B, the mobile radio terminal device 51 transmits a signal of a call starting request to the base station 40a by radio. The base radio station 40a generates a signal of a call setting request in response to the call starting request signal. The base radio station 40a transmits the call setting request signal to the circuit controller 10 via the private network 70.

Specifically, the CS call controlling section 42 of the base radio station 40a receives the call starting request signal from the mobile radio terminal device 51 by radio. The call starting request signal contains information of the identification number of a call generating source, that is, the mobile radio terminal device 51. Furthermore, the call starting request signal contains information of a telephone number of a destination to which the related call should be directed. When the CS call controlling section 42 receives the call starting request signal, it notifies the call state monitoring section 45 of the reception of the call staring request signal. The CS call controlling section 42 extracts the information of the telephone number of the destination from the call starting request signal, and generates information of the identification number of a radio channel assigned to and used by communication between the mobile radio terminal device 51 and the base radio station 40a. The CS call controlling section 42 informs the main controlling section 43 of the telephone number of the destination and the identification number of the assigned radio channel. The CS call controlling section 42 assumes a call request state in response to the call starting request signal. The call state monitoring section 45 observes conditions of the CS call controlling section 42 to decide whether or not the CS call controlling section 42 is in the call request state. When the CS call controlling section 42 assumes the call request state, the call state monitoring section 45 informs the main controlling section 43 of that fact. The main controlling section 43 commands the communication processing section 44 to issue a signal of a call setting request in response to the information from the CS call controlling section 42 (that is, the information of the telephone number of the destination and the information of the identification number of the assigned radio channel) and also the information from the call state monitoring section 45. Thus, the communication processing section 44 generates the call setting request signal. The communication processing section 44 transmits the call setting request signal to the circuit controller 10 via the private network 70. Subsequently, the main controlling section 43 changes the communication processing section 44 to a state of waiting for a signal of a call setting acceptance.

When the base radio station 40a receives a signal of a call setting acceptance from the circuit controller 10 via the private network 70, the base radio station 40a changes to a state in which voice data can be transmitted between the mobile radio terminal device 51 and the PSTN interface 30.

Specifically, the communication processing section 44 of the base radio station 40a receives the call setting acceptance signal from the circuit controller 10 via the private network 70. The communication processing section 44 informs the main controlling section 43 of the reception of the call setting acceptance signal. The main controlling section 43 retrieves the information of the identification number of the assigned radio channel when being informed of the reception of the call setting acceptance signal. In addition, the main controlling section 43 changes the CS voice data processing section 41 to a state in which voice data can be transmitted between the mobile radio terminal device 51 and the PSTN interface 30. Furthermore, the main controlling section 43 changes the CS call controlling section 42 to a state of waiting for connection. The CS call controlling section 42 informs the call state monitoring section 45 of the change to the state of waiting for connection.

When circuit connection is established as a result of the transmission of the dial pulse (including tone pulse) signal, the PSTN interface 30 outputs a signal of the establishment of connection to the circuit controller 10 via the private network 70. The circuit controller 10 transfers the connection establishment signal to the base radio station 40a via the private network 70.

The main controlling section 43 receives the connection establishment signal from the private network 70 via the communication processing section 44. The main controlling section 43 outputs a start command signal to the CS voice data processing section 41. The CS voice data processing section 41 enables voice data transfer between the mobile radio terminal device 51 and the PSTN interface 30 in response to the start command signal. The CS voice data processing section 41 transmits and receives the voice data to and from the mobile radio terminal device 51 via the assigned radio channel. The CS voice data processing section 41 transmits and receives the voice data to and from the PSTN interface 30 via the private network 70.

With reference back to Fig. 1, the master optical communication device 80a can communicate with slave optical communication devices 91 and 93 by wireless. The master optical communication device 80a transmits and receives infrared-light signals to and from the slave optical communication devices 91 and 93 to implement the communication therewith. The master optical communication device 80a serves to transmit data among the private network 70 and the slave optical communication devices 91 and 93. The slave optical communication device 91 is connected to a personal computer 103. The slave optical communication device 93 is connected to the base radio station 40c. The master optical communication device 80b can communicate with a slave optical communication device 92 by wireless. The master optical communication device 80b transmits and receives infrared-light signals to and from the slave optical communication device 92 to implement the communication therewith. The master optical communication device 80b serves to transmit data between the private network 70 and the slave optical communication device 92. The slave optical communication device 92 is connected to a personal computer 104.

Optical communications among the master optical communication devices 80a and 80b and the slave optical communication devices 91-93 have a data rate higher than that of radio communications among the base radio stations 40a-40c and the mobile radio terminal devices 51-58.

The master optical communication devices 80a and 80b are similar in structure to each other. Only the master optical communication device 80a will be explained in detail hereinafter.

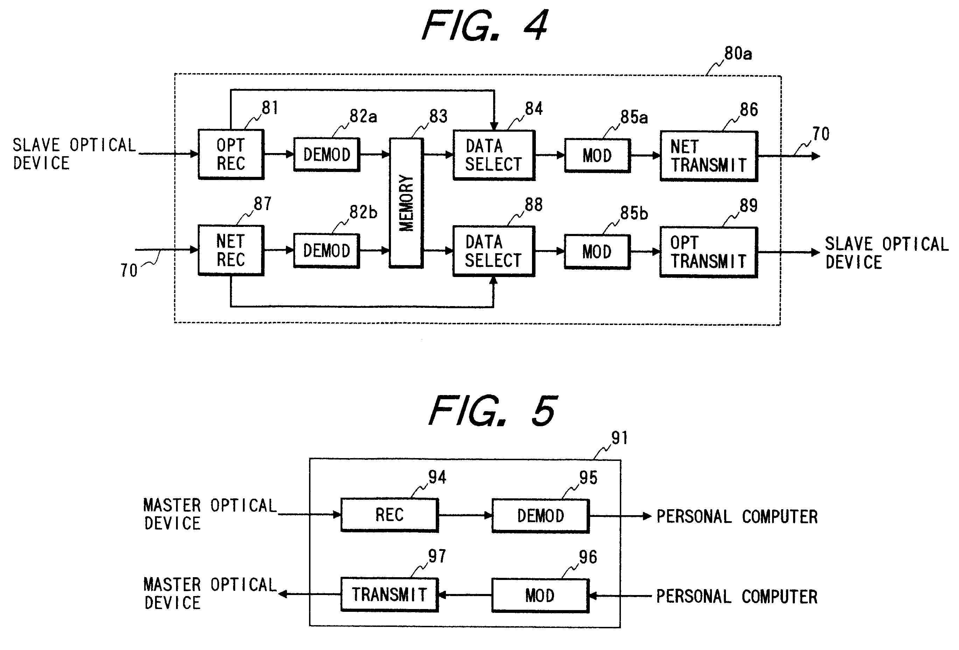

As shown in Fig. 4, the master optical communication device 80a includes an optical receiving circuit 81, demodulating circuits 82a and 82b, a memory 83, a selecting circuit 84, modulating circuits 85a and 85b, a network transmitting circuit 86, a network receiving circuit 87, a selecting circuit 88, and an optical transmitting circuit 89.

The optical receiving circuit 81 can receive optical signals (infrared-light signals) from the slave optical communication devices 91 and 93. The optical receiving circuit 81 is connected to the demodulating circuit 82a and the selecting circuit 84. The demodulating circuit 82a is connected to the memory 83. The network receiving circuit 87 is connected to the private network 70 to receive signals therefrom. Also, the network receiving circuit 87 is connected to the demodulating circuit 82b and the selecting circuit 88. The demodulating circuit 82b is connected to the memory 83. The memory 83 is connected to the selecting circuits 84 and 88. The selecting circuit 84 is connected to the modulating circuit 85a. The modulating circuit 85a is connected to the network transmitting circuit 86. The network transmitting circuit 86 is connected to the private network 70 to transmit signals thereto. The selecting circuit 88 is connected to the modulating circuit 85b. The modulating circuit 85b is connected to the optical transmitting circuit 89. The optical transmitting circuit 89 can transmit optical signals (infrared-light signals) to the slave optical communication devices 91 and 93.

The optical receiving circuit 81 converts a received optical signal into a corresponding electric signal, and outputs the electric signal to the demodulating circuit 82a. The optical receiving circuit 81 generates a control signal in response to the received optical signal, and outputs the control signal to the selecting circuit 84. The demodulating circuit 82a recovers data from the output signal of the optical receiving circuit 81 by a demodulating process. The demodulating circuit 82a stores the recovered data into the memory 83.

The network receiving circuit 87 receives a signal from the private network 70, and outputs the received signal to the demodulating circuit 82b. The network receiving circuit 87 generates a control signal in response to the received signal, and outputs the control signal to the selecting circuit 88. The demodulating circuit 82b recovers data from the output signal of the network receiving circuit 87 by a demodulating process. The demodulating circuit 82b stores the recovered data into the memory 83.

The selecting circuit 84 selects data from among the data in the memory 83, and reads out the selected data from the memory 83 in response to the control signal outputted by the optical receiving circuit 81. The selecting circuit 84 outputs the selected data to the modulating circuit 85a. The modulating circuit 85a converts the output data of the selecting circuit 84 into a corresponding modulation-resultant signal which is suited for transmission via the private network 70. The modulating circuit 85a outputs the modulation-resultant signal to the network transmitting circuit 86. The network transmitting circuit 86 transfers the output signal of the modulating circuit 85a to the private network 70.

The selecting circuit 88 selects data from among the data in the memory 83, and reads out the selected data from the memory 83 in response to the control signal outputted by the network receiving circuit 87. The selecting circuit 88 outputs the selected data to the modulating circuit 85b. The modulating circuit 85b converts the output data of the selecting circuit 88 into a corresponding modulation-resultant signal. The modulating circuit 85b outputs the modulation-resultant signal to the optical transmitting circuit 89. The optical transmitting circuit 89 converts the output signal of the modulating circuit 85b into a corresponding optical signal. The optical transmitting circuit 89 emits the optical signal toward the slave optical communication devices 91 and 93.

With reference back to Fig. 1, the slave optical communication device 91 can communicate with the master optical communication device 80a by wireless. The slave optical communication device 91 transmits and receives infrared-light signals to and from the master optical communication device 80a to implement the communication therewith. The slave optical communication device 91 can communicate with the personal computer 103. The slave optical communication device 91 serves to transmit data between the master optical communication device 80a and the personal computer 103.

The slave optical communication device 92 can communicate with the master optical communication device 80b by wireless. The slave optical communication device 92 transmits and receives infrared-light signals to and from the master optical communication device 80b to implement the communication therewith. The slave optical communication device 92 can communicate with the personal computer 104. The slave optical communication device 92 serves to transmit data between the master optical communication device 80b and the personal computer 104.

The slave optical communication device 93 can communicate with the master optical communication device 80a by wireless. The slave optical communication device 93 transmits and receives infrared-light signals to and from the master optical communication device 80a to implement the communication therewith. The slave optical communication device 93 can communicate with the base radio station 40c via a wire. The slave optical communication device 93 serves to transmit data between the master optical communication device 80a and the base radio station 40c.

The slave optical communication devices 91, 92, and 93 are similar in structure to each other. Only the slave optical communication device 91 will be explained in detail hereinafter.

As shown in Fig. 5, the slave optical communication device 91 includes a receiving circuit 94, a demodulating circuit 95, a modulating circuit 96, and a transmitting circuit 97.

The receiving circuit 94 can receive optical signals (infrared-light signals) from the master optical communication device 80a. The receiving circuit 94 is connected to the demodulating circuit 95. The demodulating circuit 95 is connected to the personal computer 103. The modulating circuit 96 is connected to the personal computer 103. The modulating circuit 96 is connected to the transmitting circuit 97. The transmitting circuit 97 can transmit optical signals (infrared-light signals) to the master optical communication device 80a.

The receiving circuit 94 converts a received optical signal into a corresponding electric signal, and outputs the electric signal to the demodulating circuit 95. The demodulating circuit 95 recovers data from the output signal of the receiving circuit 94 by a demodulating process. The demodulating circuit 95 outputs the recovered data to the personal computer 103.

The modulating circuit 96 receives data from the personal computer 103. The modulating circuit 96 converts the received data into a corresponding modulation-resultant signal. The modulating circuit 96 outputs the modulation-resultant signal to the transmitting circuit 97. The transmitting circuit 97 converts the output signal of the modulating circuit 96 into a corresponding optical signal. The optical transmitting circuit 97 emits the optical signal toward the master optical communication device 80a.

The rate of data transmission between the master optical communication device 80a and the slave optical communication device 91 is higher than the rate of data transmission between the base radio station 40a and the mobile radio terminal device 51. Preferably, the rate of data transmission between the master optical communication device 80a and the slave optical communication device 91 is set in the range of 10 Mbps to 100 Mbps.

The server 100 is programmed to control the private network 70, the base radio stations 40a and 40b, and the master optical communication devices 80a and 80b to enable transmission of data among the personal computers 101, 102, 103, and 104, and the mobile radio terminal devices 51, 52, 53, 54, 55, 56, 57, and 58. For example, data can be transmitted between the personal computers 101 and 102 via the mobile radio terminal device 51, the base radio station 40a, the private network 70, the base radio station 40b, and the mobile radio terminal device 56. Data can be transmitted between one of the mobile radio terminal devices 51-53 and one of the mobile radio terminal devices 57 and 58 via the base radio station 40a, the private network 70, the master optical communication device 80a, the slave optical communication device 93, and the base radio station 40c. Data can be transmitted between the personal computers 101 and 104 via the mobile radio terminal device 51, the base radio station 40a, the private network 70, the master optical communication device 80b, and the slave optical communication device 92.

The circuit controller 10 is programmed to control the ISDN interface 20, the PSTN interface 30, the base radio stations 40a and 40b, and the master optical communication device 80a to enable transmission of voice data among the mobile radio terminal devices 51, 52, 53, 54, 55, 56, 57, and 58, external devices connected to the public ISDN network 60A, and external devices connected to the analog public telephone network 60B. For example, voice data can be transmitted between one of the mobile radio terminal devices 51-53 and an external device connected to the public ISDN network 60A via the base radio station 40a, the private network 70, and the ISDN interface 20. Voice data can be transmitted between one of the mobile radio terminal devices 51-53 and an external device connected to the analog public telephone network 60B via the base radio station 40a, the private network 70, and the PSTN interface 30. Voice data can be transmitted between one of the mobile radio terminal devices 57 and 58 and an external device connected to the public ISDN network 60A via the base radio station 40c, the slave optical communication device 93, the master optical communication device 80a, the private network 70, and the ISDN interface 20. Voice data can be transmitted between one of the mobile radio terminal devices 57 and 58 and an external device connected to the analog public telephone network 60B via the base radio station 40c, the slave optical communication device 93, the master optical communication device 80a, the private network 70, and the PSTN interface 30.

The circuit controller 10 and the server 100 are programmed to control the ISDN interface 20, the PSTN interface 30, the base radio stations 40a and 40b, the private network 70, and the master optical communication devices 80a and 80b to enable transmission of data among the personal computers 101, 102, 103, and 104, external devices connected to the public ISDN network 60A, and external devices connected to the analog public telephone network 60B. For example, data can be transmitted between the personal computer 103 and an external device connected to the public ISDN network 60A via the slave optical communication device 91, the master optical communication device 80a, the private network 70, and the ISDN interface 20. Data can be transmitted between the personal computer 103 and an external device connected to the analog public telephone network 60B via the slave optical communication device 91, the master optical communication device 80a, the private network 70, and the PSTN interface 30. Data can be transmitted between the personal computer 102 and an external device connected to the public ISDN network 60A via the mobile radio terminal device 56, the base radio station 40b, the private network 70, and the ISDN interface 20. Data can be transmitted between the personal computer 102 and an external device connected to the analog public telephone network 60B via the mobile radio terminal device 56, the base radio station 40b, the private network 70, and the PSTN interface 30.

It should be noted that the computer in the circuit controller 10 and the computer in the server 100 may use a common computer.

A communication system includes a wire network, a first terminal device, and a second terminal device. A first master device connected to the wire network transmits and receives data to and from the first terminal device by wireless at a first data rate. For example, light is used by the wireless data transmission between the first master device and the first terminal device. A second master device connected to the wire network transmits and receives data to and from the second terminal device by wireless at a second data rate lower than the first data rate. For example, radio is used by the wireless data transmission between the second master device and the second terminal device. A server connected to the wire network manages addresses of the first and second master devices.

## Claims

1. A communication system comprising:
a wire network;
a first terminal device;
a first master device connected to the wire network, and transmitting and receiving data to and from the first terminal device by wireless at a first data rate;
a second terminal device;
a second master device connected to the wire network, and transmitting and receiving data broadly to and from the second terminal device by wireless at a second data rate lower than the first data rate; and
a server connected to the wire network for managing addresses of the first and second master devices.

2. A communication system comprising:
a wire network;
a first terminal device;
a master device connected to the wire network, and transmitting and receiving data to and from the first terminal device by light;
a second terminal device;
a base device connected to the wire network, and transmitting and receiving data to and from the second terminal device by radio; and
a server connected to the wire network for managing an address of the master device and an address of the base device.

3. A communication system as recited in claim 2, wherein the server comprises means for enabling and controlling transmission of data between the master device and the base device via the wire network.

4. A communication system as recited in claim 2, further comprising an interface connected between the wire network and a public telephone network, and a circuit controller connected to the wire network for enabling and controlling communication between the second terminal device and the public telephone network via the base device, the wire network, and the interface.

5. A communication system comprising:
a private wire network;
a slave communication device;
a master communication device connected to the private wire network, and transmitting and receiving data to and from the slave communication device by light;
a mobile radio communication device; and
a base radio communication device connected to the private wire network, and transmitting and receiving data to and from the mobile radio communication device by radio.

6. A communication system as recited in claim 5, further comprising a server connected to the private wire network for enabling and controlling transmission of data between the master communication device and the base radio communication device via the private wire network.

7. A communication system as recited in claim 5, further comprising an interface connected between the private wire network and a public telephone network, and a circuit controller connected to the private wire network for enabling and controlling communication between the mobile radio communication device and the public telephone network via the base radio communication device, the private wire network, and the interface.

8. A circuit controller comprising:
means for managing addresses of respective devices connected to a private wire network; and
means for controlling communication between an interface connected to a public telephone network and a mobile radio station via a base radio station connected to the private wire network;
wherein the interface and the base radio station are formed by the devices connected to the private wire network.
